# FASCICULE DE BREVET EUROPEEN

(11) **EP 3 679 711 B1**
(45) Date de publication et mention de la délivrance du brevet: **03.08.2022**
(21) Numéro de dépôt: 18759343.9
(22) Date de dépôt: 03.09.2018
(51) Int. Cl.: H04L 61/5007

(54) **PROCÉDÉ DE COMMUNICATION ENTRE ÉLÉMENTS COMMUNICANTS FAISANT PARTIE D'UN SYSTÈME DOMOTIQUE**
VERFAHREN ZUR KOMMUNIKATION ZWISCHEN KOMMUNIKATIONSELEMENTEN, DIE ZU EINEM HEIMAUTOMATISIERUNGSSYSTEM GEHÖREN
METHOD FOR COMMUNICATING BETWEEN COMMUNICATING ELEMENTS FORMING PART OF A HOME AUTOMATION SYSTEM

(30) Priorité: 04.09.2017 FR 1758150
(43) Date de publication de la demande: 15.07.2020
(73) Titulaire: Somfy Activites SA, 74300 Cluses (FR)
(72) Inventeur: FARGIER, Sylvain, 74300 Cluses (FR)
(74) Mandataire: Lavoix
(86) Numéro de dépôt international: PCT/EP2018/073585
(87) Numéro de publication internationale: WO 2019/043218

(56) Documents cités:
- S Thomson ET AL: "IPv6 Stateless Address Autoconfiguration; rfc4862.txt", , 1 septembre 2007 (2007-09-01), pages 1-30, XP055265358, Extrait de l'Internet: URL:https://tools.ietf.org/pdf/rfc4862.pdf [extrait le 2016-04-14]
- NARTEN IBM CORPORATION R DRAVES MICROSOFT RESEARCH S KRISHNAN ERICSSON RESEARCH T: "Privacy Extensions for Stateless Address Autoconfiguration in IPv6; rfc4941.txt", PRIVACY EXTENSIONS FOR STATELESS ADDRESS AUTOCONFIGURATION IN IPV6; RFC4941.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 septembre 2007 (2007-09-01), XP015052477,
- NARTEN IBM E NORDMARK SUN MICROSYSTEMS W SIMPSON DAYDREAMER H SOLIMAN ELEVATE TECHNOLOGIES T: "Neighbor Discovery for IP version 6 (IPv6); rfc4861.txt", NEIGHBOR DISCOVERY FOR IP VERSION 6 (IPV6)?; RFC4861.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 septembre 2007 (2007-09-01), XP015052407,

## Description

La présente invention concerne un procédé de communication entre éléments communicants faisant partie d'un système domotique pour un bâtiment, ainsi qu'un élément communicant faisant partie d'un système domotique associé et un système domotique associé.

L'invention se situe dans le domaine de la domotique pour bâtiments à usage commercial, industriel ou résidentiel, qu'ils soient individuels ou collectifs.

La domotique, ou « Building Automation Systems » en anglais, concerne l'équipement de bâtiments d'automatismes commandables à distance, visant à assurer des fonctions de sécurité, de confort ou de gestion d'énergie. Il s'agit par exemple de la commande de systèmes de chauffage, de climatisation, de l'actionnement à distance de stores ou volets roulants, ou de la sécurisation à distance par contrôle de systèmes de fermeture.

Typiquement, les équipements d'un même bâtiment sont connectés à une unité de commande, qui a pour fonction de superviser ces équipements et d'en piloter le fonctionnement. Cette connexion est souvent réalisée en raccordant les équipements, par des liaisons filaires, à un bus de données commun, tel qu'un bus multipoints autorisant une connexion bidirectionnelle, par exemple de type RS485. Ce bus de données est relié à l'unité de commande, de manière à former un réseau qui autorise l'échange de données entre les équipements et l'unité de commande.

Une telle situation présente cependant des inconvénients.

D'une part, elle offre une flexibilité limitée, car toute modification postérieure à l'installation nécessite de recâbler le réseau, que ce soit pour ajouter de nouveaux équipements ou pour modifier leur répartition dans le bâtiment. Cela oblige à mettre en œuvre des travaux pouvant être longs et coûteux et nécessitant l'intervention de techniciens spécialisés.

D'autre part, cette situation connue présente des limites en termes de nombre d'équipements pouvant être accueillis sur le réseau. Par exemple, les solutions de type RS485 actuellement utilisées présentent des capacités d'adressage limitées, par exemple permettant de connecter au maximum 255 équipements sur un même bus. Cette limite est rédhibitoire lorsqu'il s'agit d'équiper des bâtiments de grande taille et/ou comprenant un grand nombre d'équipements à gérer. Or, les applications contemporaines rendent nécessaire de pouvoir gérer un grand nombre d'équipements, par exemple dans le cadre de l'internet des objets.

En outre, l'architecture de ces réseaux connus peut conduire à l'apparition de temps de latence élevés lors de la communication entre un équipement et l'unité de commande. Cela s'explique notamment par le fait que la commande est centralisée et que les informations émises par les équipements doivent remonter vers le bus pour être traitées par l'unité de contrôle. Or, pour certaines applications, un temps de latence trop élevé peut être préjudiciable au bon fonctionnement de l'équipement.

Pour remédier à ces inconvénients, il est proposé d'améliorer le système domotique en ajoutant une architecture de réseau de communication, de préférence hiérarchique, permettant de gérer un grand nombre d'équipements, chaque équipement étant un élément communicant du système domotique, tout en présentant une flexibilité d'installation et d'évolution accrue.

Les éléments communicants du système domotique deviennent des nœuds du réseau, ayant chacun une adresse réseau permettant la communication dans le réseau hiérarchique. Le système comporte un réseau principal de niveau de hiérarchie supérieur, et un ou plusieurs sous-réseaux de niveaux de hiérarchie inférieurs, connectés par des équipements réseau, passerelles ou des routeurs.

Dans un système domotique, certains équipements doivent être remplacés ou déplacés, par exemple pour des raisons de maintenance ou de modernisation.

Lorsque les équipements domotiques sont branchés en tant qu'éléments communicants d'un réseau de communication, tout changement ou déplacement d'équipement domotique entraîne un changement dans le réseau de communication. En particulier, il est nécessaire de fournir une nouvelle adresse réseau à un élément communicant qui a été déplacé ou à un nouvel élément communicant. Pour cela, de nombreuses communications entre divers équipements réseau sont nécessaires, pouvant induire une surcharge de trafic réseau. Une reconfiguration d'un ou plusieurs éléments communicants est aussi nécessaire de façon manuelle.

Le document « IPv6 Stateless Address Autoconfiguration; rfc4862.txt" de S.Thomson et al, du 1 septembre 2007 décrit des méthodes de configuration d'adresse réseau selon le protocole de communication IPv6.

L'invention a pour but de remédier à tout ou partie des inconvénients précités, en proposant un mécanisme de communication simplifié en cas de modification de connexion ou de changement.

A cet effet, l'invention concerne un procédé de communication entre éléments communicants faisant partie d'un système domotique pour un bâtiment selon la revendication 1.

Avantageusement, l'invention permet, grâce à la mémorisation d'au moins une adresse précédente, de faciliter le fonctionnement du réseau de communication.

Le procédé de communication selon l'invention peut également présenter une ou plusieurs des caractéristiques des revendications dépendantes 2 à 7, prises indépendamment ou selon toutes leurs combinaisons techniquement acceptables.

Selon un autre aspect, l'invention concerne un élément communicant faisant partie d'un système domotique pour un bâtiment, selon la revendication 8.

Selon un autre aspect, l'invention concerne un système domotique pour un bâtiment comportant une pluralité d'éléments communicants selon la revendication 9.

D'autres caractéristiques et avantages de l'invention ressortiront de la description qui en est donnée ci-dessous, à titre indicatif et nullement limitatif, en référence aux figures annexées, parmi lesquelles :
- la figure 1 est une représentation schématique d'un bâtiment comprenant un système domotique selon un mode de réalisation de l'invention ;
- la figure 2 est une représentation schématique d'un réseau de communication hiérarchique pour connecter des équipements d'un système domotique dans un mode de réalisation ;
- la figure 3 est une représentation schématique d'un exemple de structure d'adresse réseau pour identifier les éléments communicants selon un protocole de communication ;
- la figure 4 est une représentation schématique d'une interface réseau d'un équipement domotique appartenant au réseau de communication de la figure 2 ;
- la figure 5 est un synoptique des principales étapes d'un procédé de communication selon un mode de réalisation.

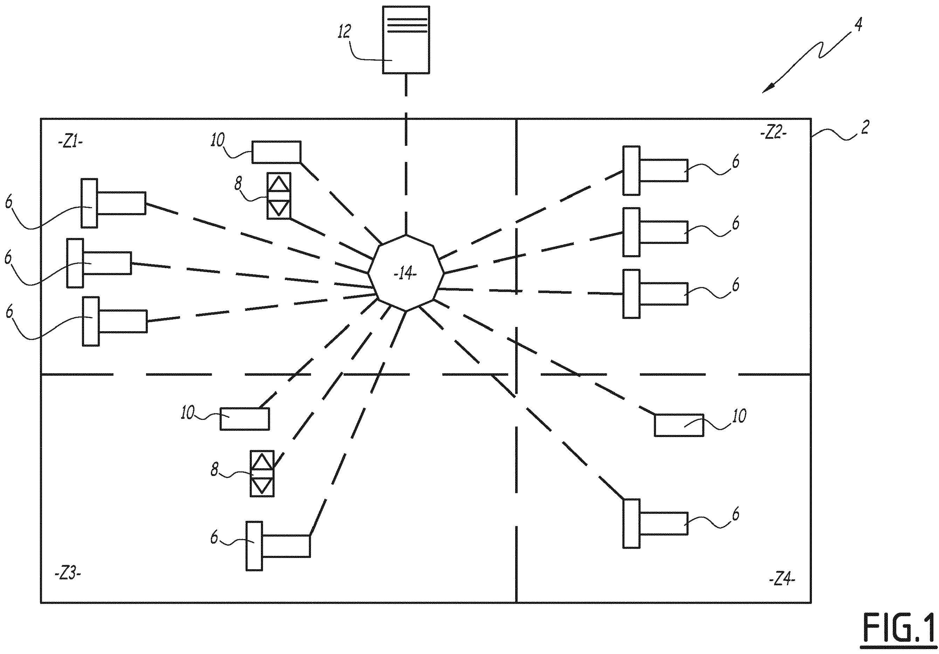

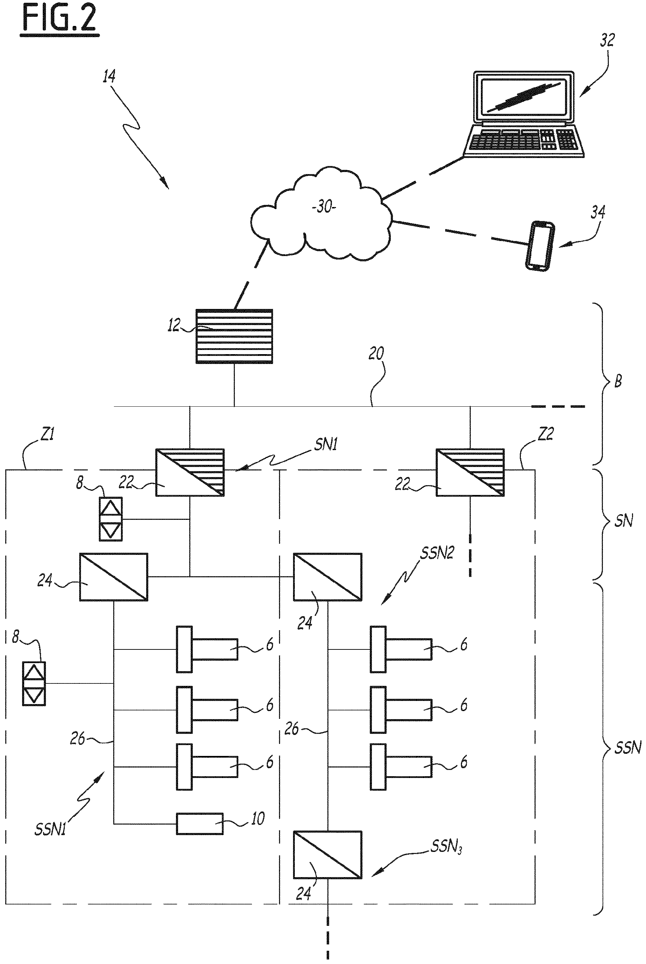

L'invention sera décrite plus particulièrement dans le contexte de sa mise en application dans un système domotique tel que décrit ci-après en référence aux figures 1 et 2, dans lequel le réseau de communication est hiérarchique. Cependant, l'invention n'est pas limitée à ce mode de réalisation, et s'applique également de manière analogue dans un réseau de communication qui n'a pas une architecture à plusieurs niveaux de hiérarchie.

La **figure 1** représente un bâtiment 2, comprenant plusieurs zones Z1, Z2, Z3, Z4. Le bâtiment 2 est équipé d'un système domotique 4 qui comporte un ensemble d'équipements domotiques répartis dans les zones du bâtiment 2, ainsi qu'un système de commande de ces équipements domotiques.

Le système domotique 4 est ici destiné à procurer des fonctions de confort et/ou de gestion d'énergie du bâtiment 2, comme le chauffage, la ventilation et la climatisation, ainsi que des fonctions de gestion de l'éclairage, de pilotage des ouvrants, tels que des stores ou des volets roulants placés devant des fenêtres du bâtiment 2 et/ou des fonctions de sécurité comme la surveillance de locaux et l'alarme.

L'ensemble d'équipements domotiques comprend des équipements domotiques tels que des appareils domotiques commandables 6, des points de commande 8 et des capteurs 10.

Le système de commande comporte notamment une unité de commande 12 programmable et un réseau de communication 14, interne au bâtiment 2, le réseau de communication 14 étant agencé pour permettre la communication des équipements domotiques du système domotique 4 avec l'unité de commande 12. Les équipements domotiques du système domotique 4 qui sont connectés à ce réseau de communication 14 sont, dans ce qui suit, dits appartenir au réseau de communication 14.

Les équipements domotiques et le système de commande sont ici raccordés à une ou plusieurs sources d'alimentation électrique, non illustrée, du bâtiment 2.

Les zones du bâtiment 2 correspondent à des portions spatiales du bâtiment 2 qui sont situées à l'intérieur et/ou l'extérieur de ce bâtiment et qui sont destinées à recevoir chacune une partie des équipements domotiques du système domotique 4.

Par exemple, des zones du bâtiment 2 correspondent à des niveaux du bâtiment 2, tels que des étages ou des sous-sols. Ces zones peuvent aussi être des pièces, des groupes de pièces du bâtiment 2, éventuellement séparées les unes des autres par des cloisons, ces pièces pouvant être réparties au sein d'un ou plusieurs niveaux du bâtiment 2. Ces zones peuvent également correspondre à des façades ou des parties de façade comme une partie de façade correspondant à un même étage.

Ces zones sont par exemple définies lors de la conception du bâtiment 2 et/ou lors de la conception et/ou l'installation du système domotique 4.

De préférence, les zones du bâtiment 2 sont distinctes les unes des autres. Toutefois, en variante, des zones du bâtiment 2 peuvent se recouper et/ou être imbriquées entre elles.

Le bâtiment 2 peut être un ensemble de bureaux, ou un bâtiment à usage d'habitation, ou un bâtiment à usage commercial ou industriel, ou toute combinaison de ces usages. Il peut notamment s'agir d'un immeuble ou d'une maison individuelle.

Ainsi, au sens de la présente description, le terme « domotique » n'est pas limité à un usage purement domestique et résidentiel.

Dans cet exemple, seules quatre zones, ici notées Z1, Z2, Z3 et Z4, sont définies en référence au bâtiment 2. Toutefois, en pratique, ce nombre peut être différent. Il est notamment adapté en fonction de la configuration du bâtiment 2 et des fonctions du système domotique 4.

Pour simplifier la figure 1, les zones Z1, Z2, Z3 et Z4 sont illustrées de façon schématique à l'intérieur d'un même étage du bâtiment 2.

De préférence, chaque appareil domotique commandable 6 comporte un actionneur pilotable au moyen d'au moins un signal de commande.

Les appareils domotiques commandables 6 sont ici illustrés de façon identique. Toutefois, ils peuvent présenter des différences entre eux et assurer des fonctions différentes au sein du système domotique 4.

Par exemple, l'actionneur de l'appareil domotique commandable 6 comprend un moteur électrique couplé avec une charge mécanique et agencé pour déplacer et/ou régler un élément du bâtiment 2.

Selon un exemple, la charge mécanique de l'appareil domotique commandable 6 est un volet occultant, tel qu'un panneau, un store ou un rideau opaque, associé à au moins une ouverture du bâtiment 2, telle qu'une fenêtre ou une baie vitrée. Le déplacement de ce volet occultant permet de réguler la quantité d'ensoleillement reçue par le bâtiment 2 au travers de cette ouverture.

Selon un autre exemple, la charge mécanique de l'appareil domotique commandable 6 est un compresseur adapté pour mettre en œuvre un cycle de détente-compression d'un fluide caloporteur au sein d'un système de réfrigération du bâtiment 2, tel qu'un climatiseur ou une pompe à chaleur, en vue de réguler la température à l'intérieur du bâtiment 2.

Selon encore un autre exemple, la charge mécanique de l'appareil domotique commandable 6 est une pompe ou un ventilateur destiné à mettre en mouvement un volume de fluide au sein du bâtiment 2, par exemple pour aspirer ou souffler de l'air au sein d'un système de ventilation, ou pour faire circuler de l'eau ou un fluide caloporteur au sein d'une conduite dédiée.

En variante, l'actionneur de l'appareil domotique commandable 6 peut piloter un dispositif de commutation électrique, afin de commander l'allumage et l'extinction d'une source lumineuse, telle qu'une batterie de lampes au néon ou à diodes électroluminescentes, au sein du bâtiment 2.

L'appareil domotique commandable 6 peut également être un éclairage, par exemple, un éclairage intérieur, extérieur ou un système de commande d'éclairage, un système d'alarme, ou encore une caméra vidéo, en particulier une caméra de vidéosurveillance.

Chaque point de commande 8 est destiné à recevoir des instructions de pilotage de la part d'un utilisateur du bâtiment 2, en vue de piloter, directement ou indirectement, un ou plusieurs des appareils domotiques commandables 6 et/ou de piloter l'unité de commande 12.

A cet effet, chaque point de commande 8 comporte ici une interface homme-machine, non illustrée, comprenant des moyens d'entrée de données, tels qu'un ou plusieurs interrupteurs et/ou un ou plusieurs boutons poussoirs et/ou un ou plusieurs boutons rotatifs et/ou un écran tactile. Le point de commande 8 peut aussi comporter une interface de connexion pour y raccorder des moyens de commande externes, par exemple un ou plusieurs interrupteurs individuels disposés autour du point de commande 8 et étant raccordés par une liaison filaire à ce point de commande 8.

Les points de commande 8 peuvent se présenter sous la forme d'une télécommande portative associée à un récepteur fixe ou, en variante, d'un terminal de commande fixe solidarisé à un mur du bâtiment 2.

Chaque capteur 10 est destiné à convertir une ou plusieurs grandeurs physiques relatives à l'état du bâtiment 2 ou de son environnement en un ou plusieurs signaux proportionnels à cette grandeur physique. Ce signal est, par exemple, un signal électrique, un signal lumineux ou un signal radiofréquence. Ce signal peut être transmis par le capteur à destination d'au moins un équipement domotique et/ou du système de commande, par exemple, l'unité de commande 12.

Un ou plusieurs capteurs 10, peuvent être intégrés à un appareil domotique commandable 6, à un point de commande 8 ou encore à l'unité de commande 12. Le système domotique 4 peut également comprendre un ou plusieurs capteurs indépendants à ces éléments.

Par exemple, les grandeurs physiques mesurées par les capteurs 10 sont, de façon non limitative, une température, par exemple une température d'un mur ou de l'air ambiant, un taux d'humidité, une valeur de luminosité, une valeur de pression de l'air ambiant, une valeur de consommation par exemple d'eau, de gaz ou d'électricité, l'état d'ouverture d'un volet roulant, la position d'un ouvrant tel une fenêtre, motorisée ou non ou encore la présence ou l'absence d'un utilisateur.

A titre d'exemple illustratif, sur la figure 1, la zone Z1 comporte trois appareils domotiques commandables 6, un point de commande 8 et un capteur 10. La zone Z2 comporte trois appareils domotiques commandables 6. La zone Z3 comporte un appareil domotique commandable 6, un point de commande 8 et un capteur 10. La zone Z4 comporte un appareil domotique commandable 6 et un capteur 10.

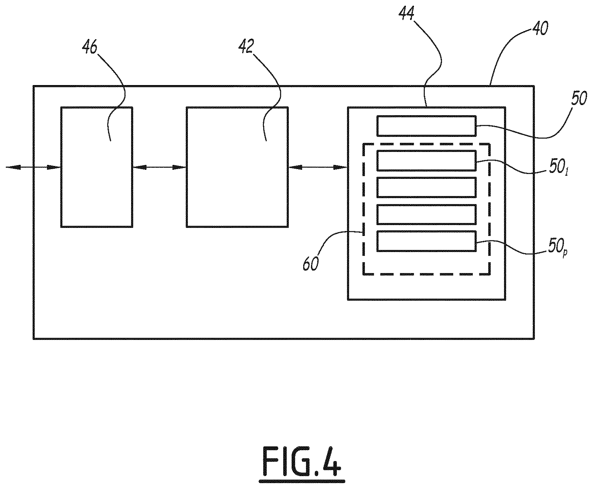

Chaque équipement domotique du système domotique 4, dont notamment les appareils domotiques commandables 6, les points de commande 8 et les capteurs 10, est connecté à l'unité de commande 12 par l'intermédiaire du réseau de communication 14 et comporte à cet effet une interface réseau 40, décrite ci-après en référence à la figure 4, pour se connecter à ce réseau de communication 14. L'unité de commande 12 comporte également une interface réseau 40.

L'interface réseau d'un élément communicant a pour fonction de connecter cet élément communicant à un ou plusieurs réseaux de communication. Elle lui permet ainsi de communiquer avec les autres éléments communicants du ou des réseaux auquel il est connecté.

Par exemple, chaque appareil domotique commandable 6 reçoit des signaux de commande par l'intermédiaire du réseau de communication 14. Chaque point de commande 8 transmet les instructions de pilotage reçues par l'intermédiaire du réseau de communication 14. Chaque capteur 10 envoie les informations mesurées par l'intermédiaire du réseau de communication 14.

La communication s'effectue selon un protocole de communication donné.

Par exemple, la communication s'effectue par un échange de messages, par exemple sous forme de paquets, ces messages contenant chacun un en-tête, qui inclut une destination du message, et des données utiles, comme un ordre de commande ou une valeur de grandeur physique mesurée par un capteur.

De préférence, le protocole de communication utilisé est un protocole IP (« Internet Protocol »), par exemple le protocole IPv6. Plus globalement, l'invention s'applique à tout protocole IPv6/ICMPv6 (Internet Control Message Protocol version 6).

La **figure 2** représente plus en détail l'exemple du réseau de communication 14 de la figure 1. Pour faciliter la lecture de cette figure 2, les équipements domotiques 6, 8, 10 associés aux zones Z3 et Z4 du bâtiment 2 n'y sont pas illustrés.

Le réseau de communication 14 est un réseau hiérarchique à plusieurs niveaux de hiérarchie, également appelé rang. Il comporte un réseau principal B, qui comprend notamment un bus de données commun, formant une liaison physique dorsale 20, aussi dite « backbone » en langue anglaise, à laquelle l'unité de commande 12 est connectée.

Par exemple, la liaison physique dorsale 20 est une liaison câblée de type Ethernet (norme IEEE 802.3), par exemple Ethernet 100Mbit/s ou supérieur.

Le réseau de communication 14 comporte également au moins un sous-réseau, noté de façon générique par la référence SN. Ce sous-réseau comporte un équipement réseau 22, 24, qui est directement connecté à la liaison dorsale 20 par l'intermédiaire d'une interface réseau 40 et qui forme la tête de ce sous-réseau SN. Il peut s'agir d'un équipement réseau d'interconnexion, également appelé passerelle 22, destiné à interconnecter deux parties de réseaux distinctes, par exemple, de technologies différentes. Il peut également s'agir d'un routeur 24 lorsque le réseau principal B et le sous-réseau SN sont de même nature.

Le terme routeur désigne un outil matériel et logiciel formant un élément intermédiaire dans un réseau et dirigeant des données, par exemple sous forme de paquets de données, entre une et plusieurs parties du réseau. La direction donnée aux données, ou routage, est réalisée selon un ensemble de règles formant une table de routage.

Le terme passerelle désigne un routeur particulier, qui assure en plus des fonctions de routage, également une fonction de traduction des messages circulant sur le réseau, dans la mesure où les moyens physiques et/ou les protocoles diffèrent entre deux parties de réseau.

En d'autres termes, le rôle des équipements réseau routeur et passerelle est de faire transiter des paquets d'une interface réseau 40 vers une autre selon un ensemble de règles formant une table de routage.

Dans l'exemple de la figure 2, deux passerelles 22 sont connectées à la liaison dorsale 20, formant ainsi deux sous-réseaux SN1 et SN2 distincts. Seul l'un de ces deux sous-réseaux, portant la référence SN1, est décrit dans ce qui suit.

En variante, le nombre de sous-réseaux SN peut être différent.

Les sous-réseaux SN sont directement connectés au réseau principal par l'intermédiaire de passerelles, et ont un premier rang associé dans le réseau hiérarchique.

Chaque sous-réseau SN contient au moins un équipement domotique 6, 8, 10 du système domotique 4, connecté à la passerelle 22 correspondante par l'intermédiaire d'une liaison physique 26, de préférence câblée.

Le réseau de communication 14 comporte en outre des sous-sous-réseaux de rang inférieur à celui des sous-réseaux SN, et sont notés de façon générique par la référence SSN.

Chaque sous-sous-réseau SSN comporte un équipement réseau, avantageusement un routeur 24, le connectant à un sous-réseau SN ou à un sous-sous-réseau de niveau hiérarchique supérieur au sien. L'équipement réseau 22, 24, forme la tête de ce sous-sous-réseau SSN.

En référence à l'exemple de la figure 2, si un rang « n » est associé au sous-réseau SN1, chaque sous-sous-réseau SSN1 et SSN2 a un rang « n-1 » associé, et le sous-sous-réseau SSN3 a un rang « n-2 ».

Chaque routeur 24 tête de sous-sous-réseau de rang « n-1 » est connecté à une passerelle 22 par l'intermédiaire d'une liaison physique 26, de préférence câblée.

Lorsque le réseau de communication 14 comporte plusieurs niveaux de hiérarchie, chaque équipement réseau 22, 24 tête de sous-sous-réseau de rang « n-k », avec k supérieur ou égal à 2, est connecté à un routeur 24 de rang supérieur « n-k+1 », par l'intermédiaire d'une liaison physique 26, de préférence câblée.

Dans un mode de réalisation, le réseau hiérarchique peut comprendre jusqu'à douze niveaux de hiérarchie, en incluant celui du réseau principal B.

Chaque sous-sous-réseau SSN comporte un ou plusieurs équipements domotiques 6, 8, 10, connectés au routeur 24 correspondant par l'intermédiaire d'une liaison physique 26, chaque équipement domotique étant connecté à la liaison physique 26 à l'aide de leurs interfaces réseau 40 respectives. Les équipements domotiques connectés, via une même liaison physique 26, à un même routeur 24 sont ici dits faire partie d'un même sous-réseau local.

De préférence, les sous-réseaux SN et chaque sous-sous-réseaux SSN de rang inférieur à celui du sous-réseau SN sont associés chacun à une zone du bâtiment 2.

Un sous-réseau SN et/ou un sous-sous-réseau SSN est dit « associé » à une zone Z1, Z2, Z3, Z4 du bâtiment 2 lorsque les équipements domotiques 6, 8, 10 appartenant à ce sous-réseau sont eux-mêmes associés à cette zone, par exemple parce qu'ils sont physiquement localisés à l'intérieur de cette zone Z1, Z2, Z3, Z4 du bâtiment 2.

Le nombre et la structure des sous-réseaux SN et des sous-sous-réseaux SSN, ainsi que leur association aux zones du bâtiment 2, sont de préférence choisis en fonction de la configuration du bâtiment 2 et des fonctionnalités remplies par le système domotique 4.

De préférence, la liaison physique 26 qui connecte chaque équipement réseau 22, 24 entre eux et qui les connecte aux équipements domotiques 6, 8, 10 est un bus de données série multipoints de type RS485.

L'utilisation d'une liaison physique 26 de type RS485 présente des avantages dans ce réseau de communication 14, car elle rend possible l'utilisation de bus de données de grande longueur, par exemple 1km de long, sans trop dégrader la qualité du signal qui y circule. La limitation du nombre d'équipements domotiques 6, 8, 10 et/ou d'équipements réseaux 22, 24 connectés sur une même liaison physique 26 n'est pas pénalisante, grâce à l'architecture hiérarchique qui permet de connecter un nombre important de sous-réseaux.

Sur la figure 2, les passerelles 22 sont des équipements réseau d'interconnexion entre un bus de données Ethernet et un bus RS485.

De façon optionnelle, l'unité de commande 12 est adaptée pour être connectée à un réseau de données extérieur 30, tel que le réseau internet, indépendamment du réseau de communication 14.

De cette manière, l'unité de commande 12 peut communiquer avec un serveur informatique distant connecté à ce réseau extérieur 30, par exemple pour envoyer des rapports sur l'état de fonctionnement du système domotique 4 à des fins de diagnostic, ou encore pour recevoir des instructions de pilotage. L'unité de commande 12 peut également communiquer par le réseau extérieur 30 avec un ou plusieurs utilisateurs distants par exemple pourvus d'un terminal de communication comme un ordinateurs 32, un appareil de téléphonie mobile intelligent ou « *smartphones* » en langue anglaise, une tablette tactile ou tout autre équipement équivalent.

Le réseau de communication 14 est adapté pour fonctionner suivant un protocole de communication prédéfini, tel que le protocole IP, afin d'assurer une communication entre les éléments communicants du système domotique 4 qui sont connectés à ce réseau de communication 14.

Dans le mode de réalisation préféré, le protocole de communication utilisé est le protocole IPv6.

Ce protocole de communication est ici implémenté à l'aide des interfaces réseau 40 qui équipent les divers équipements domotiques 6, 8, 10 et équipements réseau 22, 24 du système domotique 4 qui sont connectés par le réseau de communication 14, notamment grâce à leur interface réseau 40.

Par la suite, on désignera par le terme générique « élément communicant », les équipements réseau 22, 24 et les équipements domotiques 6, 8, 10.

Les routeurs 24 et la ou les passerelles 22 comportent des interfaces réseau spécifiques. Par exemple, ces interfaces réseau implémentent chacune une pile de protocole, c'est-à-dire un empilement de couches de protocole, chaque couche de protocole s'appuyant sur celles qui sont en dessous afin d'y apporter un supplément de fonctionnalité.

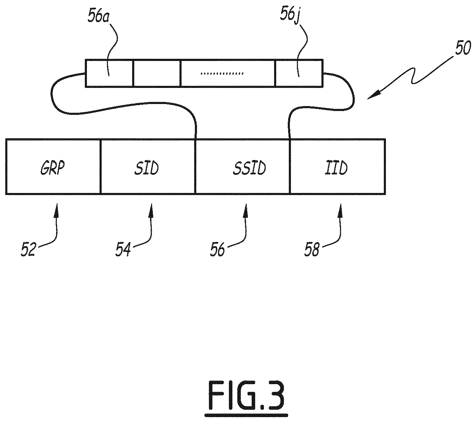

La **figure 3** représente de façon schématique un exemple d'adresse réseau de type point à point (*« unicast »* en langue anglaise) permettant de définir de manière unique un élément communicant.

L'adresse réseau 50 comporte plusieurs champs d'adressage référencés respectivement 52, 54, 56 et 58, les champs d'adressage correspondant à des niveaux de hiérarchie différents et successifs du réseau de communication 14 hiérarchique de communication. Le champ d'adressage référencé 52 contient un préfixe de site GRP pour « Global Routing Prefix », qui identifie le réseau de communication 14 dans son ensemble. Typiquement, un préfixe de site GRP unique est attribué au système domotique 4 d'un bâtiment 2.

Le préfixe de site GRP est préconfiguré de façon manuelle dans tous les équipements réseau 22, 24 destinés à être connectés sur la liaison dorsale 20. Il peut être enregistré dans une mémoire de l'équipement réseau 22, 24. Le préfixe de site GRP ne peut être modifié que de façon manuelle. Il correspond au niveau de hiérarchie le plus haut dans le réseau de communication 14.

Le champ d'adressage référencé 54 contient un identifiant de sous-réseau SID pour « Subnet IDentifier », qui identifie le sous-réseau SN de rang n, n étant un entier non nul, auquel appartient l'élément communicant considéré. A chaque sous-réseau SN connecté à la liaison dorsale 20 correspond un identifiant de sous-réseau SID différent.

Le champ adressage référencé 56 contient un identifiant de sous-sous-réseau SSID pour «Sub Subnet IDentifier », qui identifie le sous-sous-réseau SSN de rang inférieur à n auquel appartient l'élément communicant considéré.

Enfin, le champ d'adressage 58 contient un identifiant d'interface IID pour « Interface IDentifier », correspondant à l'identifiant unique de l'interface réseau 40 de l'élément communicant considéré. Dans un mode de réalisation il s'agit de l'adresse MAC qui identifie de manière unique chaque interface réseau 40 d'un élément communicant. Cet identifiant est attribué à l'interface réseau 40 lors de sa fabrication. Il peut par exemple être stocké dans une mémoire 44 de l'interface réseau 40. Suivant un autre mode de réalisation le champ d'adressage 58 correspondant à l'identifiant d'interface IID peut être renseigné lors de la fabrication de l'interface réseau.

Lorsque le protocole de communication utilisé est le protocole IPv6, l'adresse réseau 50 d'un élément communicant 6, 8, 10, 22, 24 comporte au total 128 bits, soit 16 octets. Par exemple, le nombre d'octets alloué à chacun des champs d'adressage 52, 54, 56 et 58 est respectivement de 48 bits, 16 bits, 40 bits et 24 bits.

De plus, le champ d'adressage 56 correspondant aux sous-sous-réseaux est typiquement découpé en sous-champs d'adressage 56a à 56j, permettant d'identifier plusieurs couches de sous-sous-réseaux. Chaque sous-champ d'adressage correspond à un niveau de hiérarchie différent du sous-sous-réseau SSN. Suivant un mode de mise en œuvre, le champ d'adressage 56 correspondant aux sous-sous-réseaux peut comprendre dix sous-champs d'adressage.

Lorsque le protocole de communication utilisé est le protocole IPv4, l'adresse réseau comporte au total 32 bits, soit 4 octets.

Une adresse réseau 50 est complètement configurée lorsque les différents champs d'adressage 52, 54, 56 et 58 sont renseignés, en fonction du niveau de hiérarchie du sous-réseau auquel appartient l'élément communicant considéré.

Chaque élément communicant mémorise son adresse réseau courante 50, utilisée pour l'adressage de l'élément communicant, notamment en communication point-à-point, entre un élément communicant source et un élément communicant destinataire.

De plus, avantageusement, chaque élément communicant mémorise un nombre P prédéterminé d'adresses réseau précédentes, P représentant un entier non nul. Par exemple, P=5.

Une adresse réseau précédente est une adresse réseau utilisée lors d'une précédente connexion, avant une déconnexion/reconnexion.

Ainsi, en cas de déplacement avec déconnexion et reconnexion d'un même équipement domotique au sein du système, cet équipement conserve en mémoire une ou plusieurs adresses réseau précédentes.

La **figure 4** illustre schématiquement une interface réseau 40 d'un élément communicant dans un mode de réalisation.

L'interface réseau 40 comporte un contrôleur réseau 42, une mémoire 44 et un module d'entrée-sorties 46, aussi nommé « transceiver » en langue anglaise, ce module 46 étant ici pourvu d'un connecteur qui le raccorde physiquement à une couche physique du réseau 14.

Dans cet exemple, la couche physique du réseau 14 est en partie formée par les liaisons 26.

Le contrôleur 42 comporte un calculateur électronique, par exemple un processeur, programmé pour assurer le traitement des données transitant par le réseau 14 et par le module d'entrées-sorties 46.

Par exemple, le contrôleur 42 est programmé pour traiter automatiquement les données reçues sur le module d'entrées-sorties 46 et lui étant destinées, notamment pour extraire et décoder le contenu de paquets reçus et pour transmettre ce contenu à l'équipement domotique auquel il est associé.

De façon complémentaire, le contrôleur 42 est programmé pour préparer automatiquement les données émises par l'équipement domotique auquel il est associé, en vue de leur envoi vers un ou plusieurs équipements domotiques connectés au réseau 14.

Enfin, le contrôleur 42 est adapté à mettre en œuvre des instructions de code de programme permettant d'exécuter des étapes du procédé de communication selon l'invention. La mémoire 44 contient avantageusement des instructions de code exécutable pour assurer le fonctionnement précédemment décrit du contrôleur 42.

En outre, la mémoire 44 contient ici une adresse réseau 50, ou adresse réseau courante, qui identifie de façon unique l'interface réseau 40 sur le réseau de communication 14 et qui donc identifie l'élément communicant 6, 8, 10, 22, 24 correspondant sur le réseau de communication 14.

De plus, selon un mode de réalisation de l'invention, cette mémoire 44 contient une table 60 de mémorisation des adresses réseau précédentes 50₁ à 50_{P}, c'est-à-dire, les adresses réseau de l'élément communicant considéré antérieures à son adresse courante 50. Par exemple, un nombre prédéterminé P d'emplacements est prévu, pour mémoriser P adresses réseau complètes, P représentant un entier non nul.

Bien entendu, les adresses réseau précédentes ne sont pas nécessairement renseignées. La table 60 peut contenir un nombre quelconque compris entre zéro et P d'adresses précédentes renseignées, P représentant un entier non nul.

L'interface réseau 40 est par exemple compatible avec le standard IPv6. En variante, elle est compatible avec le standard IPv4.

Avantageusement, la mémorisation d'adresses réseau précédentes permet de simplifier les communications dans le réseau de communication 14 lorsqu'un élément communicant est déplacé physiquement, par exemple, pour être connecté sur un autre sous-réseau du même réseau de communication 14 ou lorsqu'un élément communicant est remplacé, par exemple, suite à une panne de ce dernier ou pour le remplacer par un nouveau modèle.

Ainsi, par exemple, un point de commande 8 ayant été en communication avec un actionneur 6, peut, lorsque l'actionneur 6 est déplacé et reconnecté dans le réseau de communication, obtenir à la fois l'adresse réseau courante et l'adresse réseau précédente de l'actionneur 6, et mettre à jour les données préalablement mémorisées en relation avec l'actionneur 6.

Par conséquent, dans ce cas de figure, l'utilisation d'une adresse précédente permet de simplifier les communications en évitant tout besoin de collecte de données suite à un déplacement d'un équipement domotique.

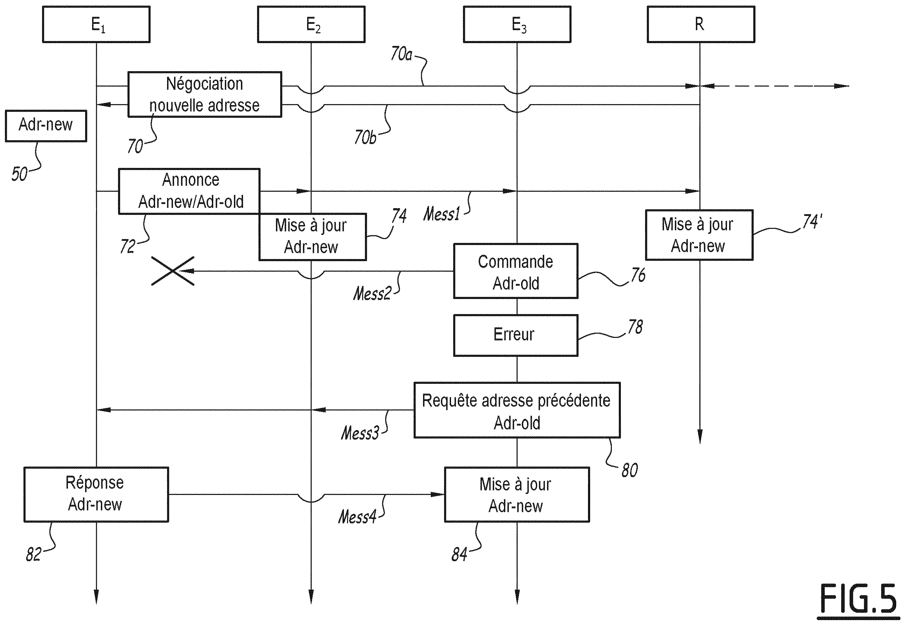

La **figure 5** est un synoptique illustrant un procédé de communication mettant en œuvre les adresses réseau précédentes mémorisées, dans un scénario d'utilisation.

Sur la figure 5 sont illustrées schématiquement les communications entre un élément communicant E1 qui est déplacé puis reconnecté au réseau de communication, deux éléments communicants E2 et E3 préalablement connectés, et un routeur R.

Dans cet exemple on considère une seule adresse réseau précédente Adr-old de l'élément communicant E1, mémorisée dans une table 60, préalablement au déplacement et à la reconnexion. La mémorisation se fait de façon systématique. Chaque élément communiquant enregistre son adresse « courante » et vérifiera qu'elle n'a pas changé au démarrage. Si elle a changé il l'enregistrera comme une adresse réseau précédente.

Lors de sa reconnexion au réseau de communication 14, l'élément communicant E1 met en œuvre une étape de mise à jour 70 de son adresse réseau courante, qui comporte une négociation d'identifiants réseau. La négociation d'identifiants réseau comporte l'émission d'une requête 70a par l'élément communicant E1 à destination du routeur R et la réception, par l'élément communicant E1, d'une réponse 70b en provenance du routeur R, après communication de ce dernier, avec une tête de réseau non représentée.

Dans la réponse 70b, l'élément communicant E1 reçoit des identifiants réseau et s'attribue une nouvelle adresse réseau Adr-new, formée à partir des identifiants réseau reçus et de son identifiant d'interface IID. L'adresse réseau Adr-new devient son adresse réseau courante et est mémorisée en tant qu'adresse réseau 50 dans la mémoire 44.

Différents mécanismes peuvent être utilisés comme l'utilisation d'un DHCP (pour « Dynamic Host Configuration Protocol » en anglais) ou SLAAC (pour « Stateless Address Auto Configuration » en anglais).

Ayant une adresse réseau précédente Adr-old en mémoire, l'élément communicant E1 effectue ensuite une communication 72 d'annonce de changement d'adresse réseau. L'annonce 72 consiste en l'envoi d'un message Mess1 ayant un format d'en-tête spécifique. Il s'agit par exemple d'un message de type multidiffusion (ou multicast en langue anglaise), adressé à tous les éléments communicants du réseau de communication 14 abonnés à un groupe de distribution prédéterminé.

Dans l'exemple, de préférence, le groupe de distribution est un groupe auquel sont abonnés tous les éléments communicants du réseau de communication 14 correspondant à une adresse de groupe.

Le message d'annonce de changement d'adresse réseau Mess1 comporte à la fois la nouvelle adresse réseau de l'élément communicant E1, Adr-new, qui est son adresse réseau courante, et l'adresse précédente Adr-old la plus récente, ou une pluralité d'adresses précédentes lorsque plusieurs adresses précédentes ont été mémorisées.

Dans l'exemple, on suppose que l'élément communicant E2 est bien connecté au réseau de communication 14 et reçoit le message d'annonce de changement d'adresse réseau Mess1, alors que l'élément communicant E3 est temporairement déconnecté ou éteint, et ne reçoit pas le message d'annonce de changement d'adresse réseau Mess1.

A réception du message d'annonce Mess1 par l'élément communicant E2, ce dernier effectue une mise à jour 74 en mémorisant l'adresse courante Adr-new de l'élément communicant E1 en remplacement de l'adresse précédente Adr-old.

Une opération analogue de mise à jour 74' est par exemple effectué par le routeur R, ainsi que par tout élément communicant connecté au réseau de communication 14, abonné au groupe de distribution prédéterminé et mémorisant l'adresse réseau de l'élément communicant E1 ou des données en lien avec l'adresse réseau de l'élément communicant E1.

A un instant ultérieur, l'élément communicant E3 se reconnecte au réseau de communication 14 et envoie, par exemple, au cours de l'étape 76, un message Mess2 de type point-à-point, contenant une commande, destiné à l'équipement domotique correspondant à l'élément communicant E1, avec pour adresse destinataire l'adresse précédente Adr-old.

L'adresse précédente Adr-old étant obsolète, le message Mess2 n'est pas reçu, ce qui est symbolisé par une croix sur le schéma de la figure 5. L'élément communicant E3 est notifié, à l'étape 78, de l'erreur de remise du message Mess2, ou déduit la non-remise du message Mess2 en l'absence d'accusé de réception de ce message.

Alors, l'élément communicant E3 envoie au cours de l'étape 80 une requête d'identification par adresse précédente, dans un message Mess3 de type multicast. La requête d'identification par adresse précédente contient l'adresse précédente Adr-old et demande à tout élément communicant connecté au réseau de communication 14 mémorisant l'adresse réseau Adr-old en tant qu'adresse réseau précédente, de s'identifier avec son adresse réseau courante.

A la réception de ce message Mess3 de requête d'identification par adresse précédente, chaque élément communicant extrait l'adresse réseau Adr-old du message Mess3, la compare à l'adresse mémorisée dans la table 60 dans la mémoire 44 et vérifie l'identité entre l'adresse Adr-old extraite du message Mess3 et l'adresse précédente mémorisée.

Cette vérification étant positive pour l'élément communicant E1, ce dernier envoie une réponse au cours de l'étape 82, la réponse étant par exemple un message Mess4, directement adressé à l'élément communicant E3 en communication point-à-point, et contenant la nouvelle adresse réseau Adr-new de l'élément communicant E1. Suivant une variante de mise en œuvre, le message est adressé en mode multidiffusion afin d'informer tous les éléments communicants. Ce type de message peut être émis lorsqu'une branche complète du réseau de communication a été déconnectée afin d'éviter une multitude de demandes après sa reconnexion.

A la réception de ce message Mess4, l'élément communicant E3 extrait du message reçu la nouvelle adresse réseau Adr-new et met à jour, au cours d'une étape 84, analogue à l'étape 74 décrite ci-dessus, la nouvelle adresse réseau Adr-new de l'élément communicant E1.

Dans un mode de mise en œuvre alternatif, un élément communicant E1 acquiert une nouvelle adresse réseau suite à un changement d'identifiant de sous-réseau SID ou de sous-sous-réseau SSID signalé par l'intermédiaire d'un message d'annonce transmis par un routeur 24 ou une passerelle 22 tête d'un sous-réseau auquel appartient l'élément communicant E1.

Dans ce mode de mise en œuvre, l'élément communicant E1 reçoit un message d'annonce signalant un changement d'identifiant, mémorise son adresse réseau courante dans la table 60 en tant qu'adresse réseau précédente Adr-old, puis met à jour son adresse réseau courante Adr-new, avec ou sans une étape de négociation.

En variante ou en complément, au moins une partie des éléments communicants du réseau, par exemple au moins les équipements réseau de type routeur 24 ou passerelle 22, implémente une requête de découverte des adresses réseau précédentes d'un ensemble ou de la totalité des éléments communicants connectés, par l'intermédiaire de l'envoi d'un message selon un mode d'envoi multidiffusion adressé à tous les éléments communicants abonnés à un groupe destinataire prédéterminé ou selon un mode point à point.

Par exemple, tous les éléments communicants sont abonnés au groupe destinataire.

En réponse à une requête de découverte des adresses réseau précédentes, chaque élément communicant abonné au groupe destinataire envoie, également en mode de communication multicast au groupe destinataire prédéterminé, et dans un message formaté de manière appropriée, l'ensemble de ses adresses précédentes mémorisées.

Selon une variante, seule l'adresse précédente la plus récente est envoyée.

Avantageusement, le mécanisme d'échange d'adresses précédentes mis en place permet de simplifier la mise à jour des adresses réseau dans le réseau de communication 14.

Le protocole de communication utilisé dans le réseau de communication 14 se trouve ainsi enrichi d'une fonctionnalité.

Dans un autre cas d'utilisation, lorsqu'un équipement domotique 6, 8, 10 est remplacé par un équipement domotique nouveau, par exemple en cas de panne ou modernisation de l'équipement domotique, il est utile de relever l'adresse réseau 50 de l'équipement domotique remplacé et de la mémoriser en tant qu'adresse réseau précédente dans la table 60 de l'équipement domotique nouveau lors de son câblage au réseau de communication 14. Ainsi, l'intégration dans le réseau de communication de l'équipement domotique nouveau en tant qu'élément communicant du réseau de communication se fait aisément grâce à la mémorisation de l'adresse réseau précédente de l'équipement domotique remplacé dans la table 60 de l'équipement domotique nouveau.

L'invention a été décrite ci-dessus plus particulièrement dans le cas d'un réseau de communication agencé sous forme de réseau hiérarchique comprenant un réseau principal comprenant un bus de données commun et une pluralité de sous-réseaux, organisés selon au moins deux niveaux de hiérarchie, au moins un premier des sous-réseaux étant connecté directement au bus de données commun par l'intermédiaire d'une passerelle, et au moins un deuxième des sous-réseaux étant connecté à la passerelle par l'intermédiaire d'un routeur et formant un sous-sous-réseau SSN de rang inférieur au premier sous-réseau SN, dans lequel chaque élément communicant du réseau a une adresse réseau comprenant une pluralité de champs d'adressage, chacun des champs d'adressage étant relatif à au moins un niveau de hiérarchie.

Il est néanmoins entendu que l'invention ne se limite pas à ce contexte de mise en œuvre, et trouve une application dans tout type de réseau de communication dans lequel on attribue aux éléments communicants connectés une adresse réseau permettant une communication point-à-point.

## Revendications

1. Procédé de communication entre éléments communicants (6, 8, 10, 22, 24) faisant partie d'un système domotique (4) pour un bâtiment (2), chaque élément communicant étant connecté dans un réseau de communication permettant une communication selon un protocole de communication prédéfini,
chaque élément communicant du réseau de communication mémorisant une adresse réseau courante (50) dans une mémoire (44) de l'élément communicant, l'adresse réseau courante étant utilisée pour un adressage point-à-point dans ledit réseau de communication (14),
et **caractérisé en ce que**
chaque élément communicant met en œuvre une mémorisation d'au moins une adresse réseau précédente (50₁,..., 50_{P}) dudit élément communicant, dans ladite mémoire (44) de l'élément communicant, une adresse réseau précédente étant une adresse réseau utilisée lors d'une précédente connexion audit réseau de communication,
le procédé comportant en outre les étapes suivantes mises en œuvre par un premier élément communicant (E1) : mise à jour (70) de l'adresse réseau courante, comportant une réception d'identifiants réseau, une formation d'adresse réseau courante à partir des identifiants réseau reçus et une mémorisation de l'adresse réseau courante,
et, ledit premier élément communicant ayant au moins une adresse précédente en mémoire, mise en œuvre d'une annonce de changement d'adresse réseau (72) par transmission d'un message d'annonce (Mess1) comportant au moins l'adresse réseau courante et au moins une adresse réseau précédente dudit premier élément communicant,
le procédé comportant en outre les étapes suivantes mises en œuvre par un deuxième élément communicant (E2, E3, R) :
à réception dudit message d'annonce par ledit au moins un deuxième élément communicant, mise à jour (74, 74'), par ledit au moins un deuxième élément communicant (E2, E3, R), consistant à mémoriser ladite adresse réseau courante du premier élément communicant dudit message d'annonce en remplacement d'une adresse réseau précédente du premier élément communicant.

2. Procédé de communication selon la revendication 1, comportant la mémorisation d'un nombre P prédéterminé d'adresses précédentes, P représentant un entier non nul.

3. Procédé de communication selon l'une des revendications 1 à 2, comportant l'envoi, par un élément communicant requérant (E3), d'une requête d'identification (80) d'un autre élément communicant du réseau par une adresse réseau précédente dudit autre élément communicant, dans un message (Mess3) destiné à un groupe de destinataires auquel une pluralité d'éléments communicants sont abonnés, ledit message (Mess) contenant au moins une adresse réseau précédente dudit autre élément communicant.

4. Procédé de communication selon la revendication 3, comprenant, en réception de ladite requête d'identification par une adresse réseau précédente,
des étapes, mises en œuvre par au moins un élément communicant récepteur appartenant au groupe de destinataires, de :
- comparaison de l'adresse réseau précédente dudit message (Mess3) avec chaque adresse réseau précédente mémorisée par ledit élément communicant récepteur, et, lorsque la comparaison est positive,
- envoi (82) à l'élément communicant requérant d'un message de réponse contenant au moins l'adresse réseau courante de l'élément communicant récepteur.

5. Procédé de communication selon l'une des revendications 1 à 2, comportant l'envoi, par un élément communicant requérant, d'une requête de découverte des adresses réseau précédentes, dans un message destiné à un groupe de destinataires auquel une pluralité d'éléments communicants sont abonnés.

6. Procédé de communication selon la revendication 5, comportant une étape, mise en œuvre par chacun des éléments communicants abonnés audit groupe de destinataires, d'envoi d'un message de réponse comprenant au moins une adresse précédente dudit élément communicant, destiné à tous les éléments communicants abonnés audit groupe de destinataires.

7. Procédé de communication selon l'une quelconque des revendications 1 à 6, dans lequel le protocole de communication est le protocole IPv6.

8. Elément communicant (6, 8, 10, 22, 24) faisant partie d'un système domotique (4) pour un bâtiment (2), adapté pour être connecté dans un réseau de communication (14) permettant une communication selon un protocole de communication prédéfini,
**caractérisé en ce qu'**il comporte une interface réseau (40), comportant une mémoire (44) adaptée pour mémoriser une adresse réseau courante (50) dudit élément communicant, utilisée pour un adressage point-à-point dans ledit réseau de communication (14), et une table (60) adaptée pour mémoriser au moins une adresse réseau précédente (50₁,...,50_{P}) dudit élément communicant, et comprenant en outre un contrôleur réseau (42), comportant un processeur adapté pour mettre en œuvre des instructions de code de programme permettant d'exécuter des étapes du procédé de communication conforme à l'une quelconque des revendications 1 à 7.

9. Système domotique (4) pour un bâtiment comportant une pluralité d'éléments communicants (6, 8, 10, 22, 24) conformes à la revendication 8, chaque élément communicant étant connecté dans un réseau de communication (14) permettant une communication selon un protocole de communication prédéfini, dans lequel chaque élément communicant est adapté pour mettre en œuvre un procédé de communication conforme à l'une quelconque des revendications 1 à 7.

## Patentansprüche

1. Verfahren zur Kommunikation zwischen kommunizierenden Elementen (6, 8, 10, 22, 24), die Teil eines Domotiksystems (4) für ein Gebäude (2) sind, wobei jedes kommunizierende Element in einem Kommunikationsnetzwerk verbunden ist, das eine Kommunikation gemäß einem vordefinierten Kommunikationsprotokoll ermöglicht,
wobei jedes kommunizierende Element des Kommunikationsnetzwerks eine aktuelle Netzwerkadresse (50) in einem Speicher (44) des kommunizierenden Elements speichert, wobei die aktuelle Netzwerkadresse für eine Punkt-zu-Punkt-Adressierung in dem Kommunikationsnetzwerk (14) verwendet wird,
**dadurch gekennzeichnet, dass**
jedes kommunizierende Element eine Speicherung von mindestens einer vorherigen Netzwerkadresse (50₁,..., 50_{P}) des kommunizierenden Elements in dem Speicher (44) des kommunizierenden Elements implementiert, wobei eine vorherige Netzwerkadresse eine Netzwerkadresse ist, die bei einer vorherigen Verbindung mit dem Kommunikationsnetzwerk verwendet wurde,
wobei das Verfahren ferner die folgenden Schritte umfasst, die von einem ersten kommunizierenden Element (E1) implementiert werden: Aktualisieren (70) der aktuellen Netzwerkadresse, umfassend ein Empfangen von Netzwerkkennungen, ein Bilden der aktuellen Netzwerkadresse anhand der empfangenen Netzwerkkennungen und ein Speichern der aktuellen Netzwerkadresse,
und, wobei das erste kommunizierende Element mindestens eine vorherige Adresse in dem Speicher aufweist, Implementieren einer Ankündigung einer Änderung der Netzwerkadresse (72) durch Übertragen einer Ankündigungsnachricht (Mess1), umfassend mindestens die aktuelle Netzwerkadresse und mindestens eine vorherige Netzwerkadresse des ersten kommunizierenden Elements,
das Verfahren ferner umfassend die folgenden Schritte, die von einem zweiten kommunizierenden Element (E2, E3, R) implementiert werden:
bei Empfangen der Ankündigungsnachricht durch das mindestens eine zweite kommunizierende Element, Aktualisieren (74, 74') durch das mindestens eine zweite kommunizierende Element (E2, E3, R), das darin besteht, die aktuelle Netzwerkadresse des ersten kommunizierenden Elements der Ankündigungsnachricht zu speichern, indem eine vorherige Netzwerkadresse des ersten kommunizierenden Elements ersetzt wird.

2. Kommunikationsverfahren nach Anspruch 1, umfassend das Speichern einer vorbestimmten Anzahl P von vorherigen Adressen, wobei P eine ganze Zahl ungleich Null darstellt.

3. Kommunikationsverfahren nach einem der Ansprüche 1 bis 2, umfassend das Senden, durch ein anforderndes kommunizierendes Element (E3), einer Anfrage zur Identifizierung (80) eines anderen kommunizierenden Elements des Netzwerks durch eine vorherige Netzwerkadresse des anderen kommunizierenden Elements in einer Nachricht (Mess3), die für eine Gruppe von Empfängern bestimmt ist, die von einer Vielzahl von kommunizierenden Elementen abonniert wird, wobei die Nachricht (Mess) mindestens eine vorherige Netzwerkadresse des anderen kommunizierenden Elements enthält.

4. Kommunikationsverfahren nach Anspruch 3, umfassend beim Empfangen der Anforderung zur Identifizierung durch eine vorherige Netzwerkadresse,
Schritte, die von mindestens einem empfangenden kommunizierenden Element, das zu der Gruppe von Empfängern gehört, implementiert werden, zu Folgendem:
- Vergleichen der vorherigen Netzwerkadresse der Nachricht (Mess3) mit jeder vorherigen Netzwerkadresse, die von dem empfangenden kommunizierenden Element gespeichert wurde, und, wenn der Vergleich positiv ist,
- Senden (82), an das anfordernde kommunizierende Element, einer Antwortnachricht, die mindestens die aktuelle Netzwerkadresse des empfangenden kommunizierenden Elements enthält.

5. Kommunikationsverfahren nach einem der Ansprüche 1 bis 2, umfassend das Senden einer Anfrage durch ein anforderndes kommunizierendes Element zum Auffinden der vorherigen Netzwerkadressen in einer Nachricht, die für eine Gruppe von Empfängern bestimmt ist, die von einer Vielzahl von kommunizierenden Elementen abonniert wird.

6. Kommunikationsverfahren nach Anspruch 5, umfassend einen Schritt, der von jedem der kommunizierenden Elemente, die auf die Gruppe von Empfängern abonniert sind, implementiert wird, um eine Antwortnachricht zu senden, die mindestens eine vorherige Adresse des kommunizierenden Elements enthält und für alle kommunizierenden Elemente bestimmt ist, die auf die Gruppe von Empfängern abonniert sind.

7. Kommunikationsverfahren nach einem der Ansprüche 1 bis 6, wobei das Kommunikationsprotokoll das IPv6-Protokoll ist.

8. Kommunizierendes Element (6, 8, 10, 22, 24), das Teil eines Domotiksystems (4) für ein Gebäude (2) ist, das angepasst ist, um in einem Kommunikationsnetzwerk (14) verbunden zu werden, das eine Kommunikation gemäß einem vordefinierten Kommunikationsprotokoll ermöglicht,
**dadurch gekennzeichnet, dass** es eine Netzwerkschnittstelle (40) umfasst, umfassend einen Speicher (44), der angepasst ist, um eine aktuelle Netzwerkadresse (50) des kommunizierenden Elements zu speichern, die für eine Punkt-zu-Punkt-Adressierung in dem Kommunikationsnetzwerk (14) verwendet wird, und eine Tabelle (60), die angepasst ist, um mindestens eine vorherige Netzwerkadresse (50₁,..., 50_{P}) des kommunizierenden Elements zu speichern, und ferner umfassend eine Netzwerksteuerung (42), umfassend einen Prozessor, der angepasst ist, um Programmcodeanweisungen zu implementieren, die ermöglichen, Schritte des Kommunikationsverfahrens gemäß einem der Ansprüche 1 bis 7 auszuführen.

9. Domotiksystem (4) für ein Gebäude, umfassend eine Vielzahl von kommunizierenden Elementen (6, 8, 10, 22, 24) nach Anspruch 8, wobei jedes kommunizierende Element in einem Kommunikationsnetzwerk (14) verbunden ist, das eine Kommunikation gemäß einem vordefinierten Kommunikationsprotokoll ermöglicht, wobei jedes kommunizierende Element angepasst ist, um ein Kommunikationsverfahren gemäß einem der Ansprüche 1 bis 7 zu implementieren.

## Claims

1. - A communication method for communicating between communicating elements (6, 8, 10, 22, 24) forming part of a home automation system (4) for a building (2), with each communicating element being connected in a communication network that supports communication according to a predefined communication protocol,
each communicating element of the communication network memorizing a current network address (50) in a memory storage (44) of the communicating element, the current network address being used for point-to-point addressing in the said communication network (14),
and **characterized in that** each communicating element implements the memorizing of at least one previous network address (50₁,..., 50_{P}) of the said communicating element, in the said memory storage (44) of the communicating element, a previous network address being a network address used during a precedent connection to the communication network,
the method further comprising the following steps that are operationally implemented by one first communicating element(E1) : updating (70) the current network address, comprising receiving network identifiers, forming the current network address from the network identifiers received and memorizing said current network address,
and, said first communicating element having at least one previous network address in memory, implementing an announcement of change of network address (72) by transmission of an announcement message (Mess1) comprising at least the current network address and at least one previous network address of said first communicating element,
the method further comprising the following steps implemented by a second communicating element (E2, E3,R):
upon reception of said announcement message by said at least one second communicating element, updating (74, 74'), by said at least one second communicating element (E2, E3, R), consisting in memorizing said current network address of the first communicating element of the announcement message as a replacement of a previous address of the first communicating element.

2. - A communication method according to claim 1, comprising the memorizing of a predetermined number P of previous addresses, P representing a non-zero integer.

3. - A communication method according to one of claims 1 to 2, comprising the sending, by a requesting communicating element (E3), of a request for identification (80) of another communicating element of the network by a previous network address of the said other communicating element, in a message (Mess3) to be forwarded to a group of recipients to which a plurality of communicating elements are subscribed, the said message (Mess) containing at least one previous network address of the said other communicating element.

4. - A communication method according to claim 3, comprising, upon receipt of the said identification request by a previous network address, the steps,
implemented by at least one receiving communicating element belonging to the group of recipients, consisting of:
- comparison of the previous network address of said message (Mess3) with each previous network address memorized by the said receiving communicating element, and, when the comparison is positive, and
- sending (82) to the requesting communicating element a response message containing at least the current network address of the receiving communicating element.

5. - A communication method according to one of claims 1 to 2, comprising the sending, by a requesting communicating element, of a request for discovery of the previous network addresses, in a message to be forwarded to a group of recipients to which a plurality of communicating elements are subscribed.

6. - A communication method according to claim 5, comprising a step, effectively implemented by each of the communicating elements subscribed to the said group of recipients, consisting of: sending of a response message comprising at least one previous address of the said communicating element, to be forwarded to all the communicating elements subscribed to the said group of recipients.

7. - A communication method according to any one of claims 1 to 6, wherein the communication protocol is the Internet Protocol version 6 (IPv6).

8. - A communicating element (6, 8, 10, 22, 24) forming part of a home automation system (4) for a building (2), which is adapted so as to be connected in a communication network (14) that supports communication according to a predefined communication protocol,
**characterised in that** it comprises a network interface (40), comprising a memory storage (44) adapted so as to memorize a current network address (50) of the said communicating element, used for point-to-point addressing in the said communication network (14), and a table (60) adapted so as to memorize at least one previous network address (50₁,..., 50p) of the said communicating element, and further comprising a network controller (42), comprising a processor configured to implement program code instructions to be used in order to execute the steps of the communication method according to any one of claims 1 to 7.

9. - A home automation system (4) for a building comprising a plurality of communicating elements (6, 8, 10, 22, 24) in accordance with claim 8, with each communicating element being connected in a communication network (14) that supports communication according to a predefined communication protocol, wherein each communicating element is configured to implement a communication method according to any one of claims 1 to 7.
